# EUROPEAN PATENT APPLICATION

(11) **EP 4 517 780 A1**
(43) Date of publication of application: **05.03.2025**
(21) Application number: 22937100.0
(22) Date of filing: 01.07.2022
(51) Int. Cl.: G21D 3/00

(54) **MONITORING METHOD AND SYSTEM FOR ACCIDENT WORKING CONDITION OF NUCLEAR POWER PLANT SET**

(30) Priority: 11.04.2022 CN 202210371377
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: WU, Yuejun, Shenzhen, Guangdong 518124 (CN); LI, Min, Shenzhen, Guangdong 518124 (CN); WANG, Taike, Shenzhen, Guangdong 518124 (CN); MA, Tingwei, Shenzhen, Guangdong 518124 (CN); LIU, Zhiyun, Shenzhen, Guangdong 518124 (CN); SUN, Chen, Shenzhen, Guangdong 518124 (CN); LIU, Yuhua, Shenzhen, Guangdong 518124 (CN); LIU, Liu, Shenzhen, Guangdong 518124 (CN)
(74) Representative: Greaves Brewster LLP
(86) International application number: PCT/CN2022/103208
(87) International publication number: WO 2023/197462

(57) **Abstract**

The present application provides a monitoring method and system for an accident working condition of a nuclear power plant set including the steps of : collecting accident working condition feature parameters, important unit safety signals and special safety facility states relating to typical accident working conditions (101); analyzing and processing the accident working condition feature parameters, and selecting abnormal feature parameters that are not within a preset threshold range (102); performing parallel diagnosis on the various typical accident working conditions via a number of logic calculation units (103); and displaying diagnosis results of all the typical accident working conditions on an automatic accident working condition diagnosis screen for a unit (104). According to the present application, accident working condition feature parameters, important unit safety signals and special safety facility states are monitored in real time, starting accidents or superimposed accidents of a unit are automatically diagnosed in parallel, and the accidents are displayed via a human-machine interaction interface, thereby assisting an operator in determining and handling accident working conditions of the nuclear unit.

## Description

### FIELD OF THE INVENTION

The present invention generally relates to nuclear power plants and, more particularly, relates to a monitoring method and system for an accident working condition of a nuclear power plant set.

### BACKGROUND OF THE INVENTION

In the event of a failure or accident in a nuclear power plant, to ensure the safety of the nuclear power plant, protect the integrity of three barriers, and limit the release of radioactive materials to the outside, it is necessary to bring the unit under control or to a safe shutdown state. The accident operating procedures are used to guide the operators to control the unit after a failure or accident, by maximizing the use of available system functions, reducing abnormalities or limiting the consequences of the accident, and restoring the unit to a safe state.

At present, a known nuclear power technology employs state-oriented or symptom-oriented accident procedures, where the operators primarily execute the accident procedures according to the deterioration of a few parameters representing the state of the reactor's three major safety functions, lacks understanding of the cause of the accident, which is unfavorable for accident management and affects the efficiency of handling the accident.

In view of the foregoing, what is needed, therefore, is to provide a monitoring method and system for accident working condition of a nuclear power plant set.

### SUMMARY OF THE INVENTION

One object of the present invention is to provide a monitoring method and system for an accident working conditions of a nuclear power plant set which can automatically diagnose the starting accidents or superimposed accidents of the unit, and can display the causes of the accidents.

According to one embodiment of the present application, a monitoring method for an accident working condition of a nuclear power plant set comprises the steps of:
collecting accident working condition feature parameters, important unit safety signals and special safety facility states relating to typical accident working conditions;
analyzing and processing the accident working condition feature parameters, and selecting abnormal feature parameters that are not within a preset threshold range;
performing parallel diagnosis on various typical accident working conditions via a plurality of logic calculation units, each logic calculation unit performing logic calculation on abnormal feature parameters, important unit safety signals and special safety facility states relating to the logic calculation unit according to a preset logic, and diagnosing whether typical accident working conditions corresponding to the logic calculation unit have occurred; and
displaying diagnosis results of all typical accident working conditions on an automatic accident working condition diagnosis screen for a unit.

According to one aspect of the present invention, the typical accident working conditions comprise typical thermal and hydraulic accidents, loss of support function accidents, and spent fuel pool events; wherein the typical thermal and hydraulic accidents comprise steam generator heat transfer tube rupture accidents, primary circuit rupture accidents, primary circuit reactivity accidents, and secondary circuit rupture accidents; the loss of support function accidents comprise off-site power loss accidents, power loss accidents in plant, electrical panels power loss accidents, total loss of cold chain accidents, and residual heat removal system failures; the spent fuel pool events comprise spent fuel pool cold loss accidents and spent fuel pool water loss accidents;
at least one logic calculation unit is provided for each typical accident working condition, with logic calculation units of different typical accident working condition being performed in parallel, for performing logic calculation on different typical accident working conditions respectively.

According to one aspect of the present invention, a steam generator heat transfer tube rupture logic calculation unit is used to diagnose whether a steam generator heat transfer tube rupture accident has occurred, and diagnose that a steam generator heat tube rupture accident has occurred if any of the following conditions is met:
leakage rate balance abnormal signal of the primary circuit and the secondary circuit exists;
radioactive measurement value of steam pipeline on a secondary side of the steam generator is greater than a high-high threshold, or radioactive measurement value of the condensate sampling from the steam generator is greater than a high-high threshold;
radioactive measurement value of the steam pipeline on the secondary side of the steam generator is greater than a high threshold, or the radioactive measurement value of the condensate sampling from the steam generator is greater than a high threshold, combined with low level in the primary circuit pressurizer or low level in the volume control tank.

According to one aspect of the present invention, the primary circuit rupture accidents are distinguished into rupture in the containment and rupture in the safety building depending on location of the rupture, and two accident logic calculation units are used to diagnose the two types of rupture accidents respectively;
a containment rupture accident logic calculation unit is used to diagnose whether a containment rupture accident has occurred, and determines a containment rupture accident has occurred if any of the following conditions is met: (a) dose rate measurement value inside the containment reaches a high-high threshold; (b) dose rate measurement inside the containment reaches a high threshold, combined with pressure measurement value inside the containment reaches a high threshold; (c) in condition of primary circuit closure, pressure measurement value inside the containment reaches a high threshold, and a signal of low primary circuit subcooling or low pressure vessel level exists;
a safety building rupture accident logic calculation unit is used to diagnose whether a safety building rupture accident has occurred, and logic for diagnosing that a safety building rupture accident has occurred is signal for the residual heat removal system to allow connection has been activated, pressure measurement value in the safety building is greater than high threshold or level measurement value in the safety building pit is greater than a high threshold.

According to one aspect of the present invention, the secondary circuit rupture accident logic calculation unit is used to diagnose whether a secondary circuit rupture accident has occurred, and occurrence of any of the following conditions will diagnose that the secondary circuit rupture accident has occurred:
valve compartment measurement value of a main steam isolation valve reaches a high threshold;
compartment measurement value of a main feedwater system pipeline reaches a high threshold;
an automatic isolation signal for isolation valve of one column of the main steam release system exists, and automatic isolation signal for the isolation valve of three columns of the main steam release system does not exist;
pressure difference inside two steam generators is high, and signal allowing connection to the residual heat removal system is not activated, combined with automatic isolation signal for isolation valves of three columns of the main steam release system exists.

According to one aspect of the present invention, the primary circuit reactivity accident logic calculation unit is used to diagnose whether a primary circuit reactivity accident has occurred, and any of the following conditions can diagnose that a primary circuit reactivity accident has occurred:
total boron concentration measurement value of the primary circuit is lower than a low threshold;
overpower or overtemperature Δ T trip signal;
high power range/ high low set point neutron flux rate;
high neutron flux rate in intermediate range;
high neutron flux rate in source range;
low position of R rod during power operation;
high neutron flux rate during shutdown.

According to one aspect of the present invention, the diagnosis logic for the loss of support function accident is:
judging occurrence of the off-site power loss accident by existence of an alarm for loss of voltage on the corresponding plant AC bus;
judging occurrence of a power loss accidents in plant by existence of an alarm for loss of voltage on the corresponding emergency bus and non-emergency bus;
judging occurrence of the electrical panels power loss accidents by existence of an alarm for loss of voltage on the corresponding electrical panels;
judging occurrence of the total loss of cold chain accidents by existence of an alarm for the loss of the equipment cooling water system and the important plant water system;
judging occurrence of residual heat removal system failures by existence of an alarm for an equipment failure in the residual heat removal system.

According to one aspect of the present invention, the spent fuel pool water loss accident is characterized by water level measurement value of the spent fuel pool reaching a low threshold;
the spent fuel pool cold loss accidents are diagnosed by spent fuel pool cold loss accident logic calculation unit, and the spent fuel pool cold loss accidents are determined to have occurred if any of the following conditions is met:
loss of all spent fuel pool cooling columns;
measurement temperature of the spent fuel pool reaches a high-high threshold;
loss of part of the spent fuel pool cooling columns and measurement temperature of the spent fuel pool reaches a high threshold.

According to one aspect of the present invention, the monitoring method for an accident working condition of a nuclear power plant set further comprises: when the diagnosis result is that a typical accident working condition of the nuclear power plant set occurs, an sound and light alarm is issued to request the operator to call the automatic diagnosis screen for the unit accident working condition; the operator obtains the diagnosis result of the typical accident working condition of the nuclear power plant set via the automatic diagnosis screen for the unit accident working condition, and obtains diagnosis logic decomposition screen for specific typical accident working condition via corresponding navigation link on the automatic diagnosis screen for the accident working condition.

According to another embodiment of the present invention, a monitoring system for an accident working condition of a nuclear power plant set, comprises:
a collecting module, used for collecting accident working condition feature parameters, important unit safety signals and special safety facility states relating to typical accident working conditions;
an analyzing and processing module, used for analyzing and processing the accident working condition feature parameters, and selecting abnormal feature parameters that are not within a preset threshold range;
a logic calculation module, comprising a plurality of logic units in parallel; each logic calculation unit is used for performing logic calculation on abnormal feature parameters, important unit safety signals and special safety facility states relating to the logic calculation unit according to a preset logic, and diagnosing whether typical accident working conditions corresponding to the logic calculation unit have occurred; and
a display module, used for displaying diagnosis results of all typical accident working conditions on an automatic accident working condition diagnosis screen for a unit.

According to one aspect of the present invention, the logic calculation module is provided with at least one logic calculation unit for each typical accident working condition, and the logic calculation units for different typical accident working conditions run in parallel, performing logic calculations for different typical accident working conditions respectively.

According to one aspect of the present invention, the logic calculation module comprises:
a steam generator heat transfer tube rupture accident logic calculation unit, used for diagnosing whether a steam generator heat transfer tube rupture accident has occurred;
a containment rupture accident logic calculation unit, used for diagnosing whether a containment rupture accident has occurred;
a safety building rupture accident logic calculation unit, used diagnosing whether a safety building rupture accident has occurred;
a secondary circuit rupture accident logic calculation unit, used for diagnosing whether a secondary circuit rupture accident has occurred;
a primary circuit reactivity accident logic calculation unit, used for diagnosing whether a primary circuit reactivity accident has occurred;
an off-site power loss accident logic calculation unit, used for diagnosing whether an off-site power loss accident has occurred;
a power loss accident in plant logic calculation unit, used for diagnosing whether a power loss accidents in plant has occurred;
an electrical panels power loss accident logic calculation unit, used for diagnosing whether an electrical panels power loss accident has occurred;
a total loss of cold chain accidents calculation unit, used for diagnosing whether a total loss of cold chain accident has occurred;
a residual heat removal system failure logic calculation unit, used for diagnosing whether a residual heat removal system failure has occurred;
a spent fuel pool cold loss accidents logic calculation unit, used for diagnosing whether a spent fuel pool cold loss accident has occurred; and
a spent fuel pool water loss accidents logic calculation unit, used for diagnosing whether a spent fuel pool water loss accident has occurred.

According to one aspect of the present invention, the accident working condition automatic diagnosis screen is used to display to the user the unit safety signals, the special safety facility states, the diagnosis results of typical accidents working condition, and recommended accident operating procedures to be executed, required for automatic diagnosis of typical accidents working conditions.

According to one aspect of the present invention, the accident working condition automatic diagnosis screens comprise a typical accident working condition diagnosis displaying area, a unit state function monitoring area, a unit important safety signal monitoring area, an important equipment and special safety facility states monitoring area, a unit state diagnosis result displaying area, and a suggested operating procedure guiding area; wherein the typical accident working condition diagnosis displaying area is used to display the results of typical thermal and hydraulic accidents, the diagnosis results of loss of support function accidents, and the diagnosis results of spent fuel pool events, and to display the diagnosis results of typical accident working conditions via modularization, so that the operator can clearly understand the related unit state information.

According to one aspect of the present invention, the displaying module is further used to navigate to diagnostic logic decomposition screen of specific typical accident working conditions via corresponding navigation links on the automatic diagnosis screens of the accident working conditions.

Compared with the prior art, the monitoring method and system for an accident working condition of a nuclear power plant set of the present invention not only monitor the accident working condition feature parameters in real time, but also monitor the important unit safety signals and the special safety facility states in real time. The starting accidents or superimposed accidents of a unit are automatically diagnosed in parallel, and the accidents are displayed via a human-machine interaction interface, thereby assisting an operator in determining and handling accident working conditions of the nuclear unit.

### BRIEF DESCRIPTION OF THE DRAWINGS

The technical solution of the present invention will now be described more clearly in view of the drawings. The drawings described below only show some embodiments of the present invention. Obviously, based on the provided drawings, one ordinary skilled in the art can obtain other drawings without creative work.
Fig. 1 shows a flowchart of a monitoring method for an accident working condition of a nuclear power plant set according to one embodiment of the present invention;
Fig.2 shows a diagnosis logic diagram of SGTR accidents;
Fig. 3 shows a diagnosis logic diagram of LOCA accidents inside a containment;
Fig.4 shows a diagnosis logic diagram of LOCA accidents in the safety building;
Fig. 5 shows a diagnosis logic diagram of a secondary circuit rupture accidents;
Fig. 6 shows a diagnostic logic diagram of a primary circuit reactivity accident;
Fig. 7 shows a diagnostic logic diagram of a spent fuel pool cold loss accidents;
Fig. 8 shows a schematic diagram of an accident working condition automatic diagnosis screen according to one embodiment of the present invention;
Fig. 9 shows a schematic diagram of a diagnostic logic decomposition screen according to one embodiment of the present invention; and
Fig. 10 shows a flowchart of a monitoring system for an accident working condition of a nuclear power plant set according to one embodiment of the present invention.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

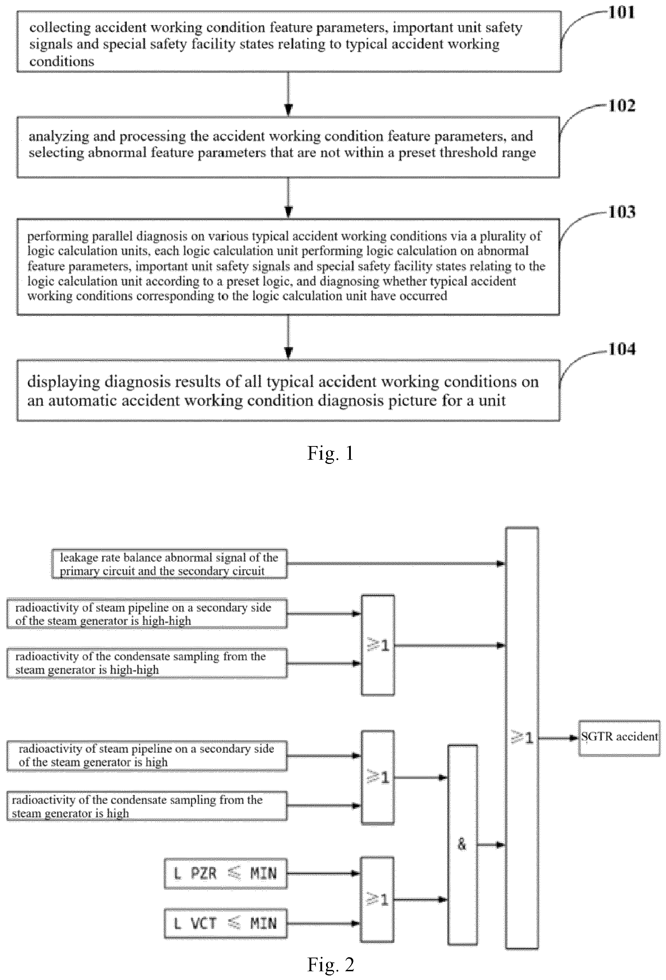

Referring to Fig. 1, the monitoring method for an accident working condition of a nuclear power plant set according to one embodiment of the present invention includes the steps of:
Step 101, collecting accident working condition feature parameters, important unit safety signals and special safety facility states relating to typical accident working conditions.

In the field of nuclear power, accident working conditions refer to conditions that deviate from normal operation and are more severe than the expected operating events of the unit, including the design basis accidents and the design extension conditions. The monitoring scope of typical accident working conditions of the present invention includes the design basis accidents and the design extension conditions, but does not include the design extension conditions with core damage.

Specifically, the PWR nuclear power plant defines six state function parameters (subcriticality, primary circuit water load, residual heat removal, steam generator water load, steam generator integrity, and containment integrity). The combination of the six state function parameters can characterize the physical state of the reactor. Therefore, the accident working conditions and the design extension conditions of the accident working conditions in the nuclear power plant condition list can be classified according to the different degradation of the six state function parameters caused by the accident working conditions.

Taking a certain pressurized water reactor nuclear power plant as an example, the classification of typical accident working conditions of the present invention is detailed as following:
(1) typical thermal and hydraulic accidents, including SGTR (steam generator heat transfer tube rupture) accidents, primary circuit LOCA (primary circuit rupture) accidents, primary circuit reactivity accidents, and secondary circuit rupture accidents;
(2) Loss of support function accidents, including LOOP (off-site power loss) accidents, SBO (power loss in plant) accidents, electrical panels power loss accidents, TLOCC (total loss of cold chain) accidents, and RIS-RHR (residual heat removal system) failures;
(3) Spent fuel pool events, including residual heat removal system failures and spent fuel pool water loss accidents.

The deterioration of the six state parameters related to the three safety functions of the unit due to the typical accident working conditions of the nuclear unit is different. Based on the evolution process and safety analysis results of the typical working accident conditions, the characteristic parameters representing the typical accident working conditions can be obtained. For example, a large rupture in the primary circuit would lead to a rapid decrease in the pressure vessel level, an increase in pressure and radioactivity in the containment vessel. During operation of the unit, these characteristic parameters need to be continuously measured, such as the characteristic parameters required for a typical thermal and hydraulic accidents in a pressurized water reactor nuclear power plant include: intermediate neutron flux, subcooling of the primary circuit, liquid level of the pressure vessel, wide range liquid level of the steam generator, radioactivity measurement value in the secondary side steam line of the steam generator, radioactivity measurement value of the condensate sampling from the steam generator, radioactivity measurement value of the condenser vacuum, containment vessel pressure, and radioactivity in the containment vessel.

Specifically, the accident working condition feature parameters can be automatically monitored and obtained via the nuclear power plant function parameter measurement instruments. For example, the reactor nuclear power can be measured by the power range detector, the intermediate range detector, and the source range detector of the nuclear instrument system. The core neutron flux, the core temperature, and the pressure vessel water level can be measured by the self-powered neutron detector and the thermocouple detector of the core measurement system. The primary circuit pressure can be measured by the reactor coolant system pressure measurement instrument arranged in the pressurizer and the safety injection system pressure measurement instrument arranged in the primary circuit hot leg. The primary circuit temperature can be measured by the narrow range temperature measurement instrument of the reactor coolant system arranged in the primary circuit cold leg and hot leg, and the wide range temperature measurement instrument of the safety injection system. The important safety signals of the unit can be obtained by using the protection signals of the normal operation of the nuclear power unit or by using the unit states parameters to design the corresponding logic. The special safety facilities refer to the safety facilities specially provided by the nuclear power plant to ensure the removal of core heat and the integrity of the containment, to limit the development of accidents and to mitigate the consequences of accidents. The special safety facilities states can be monitored by the NSSS function availability information dedicated to the unit accident working conditions.

Step 102, analyzing and processing the accident working condition feature parameters, and selecting abnormal feature parameters that are not within a preset threshold range.

Specifically, analyzing and processing the accident working condition feature parameters, and selecting abnormal feature parameters that are not within a preset threshold range includes: comparing the accident working condition feature parameters with the preset thresholds, and judging the parameters not within the preset threshold range as abnormal feature parameters.

Preferably, before comparing the accident working condition feature parameters with the preset thresholds, the accident working condition feature parameters are preprocessed, including one or two of the following processes: (1) selecting the accident working condition feature parameters according to the principle of conservative values, i.e., performing conservative values on the collected multiple redundant data, such as taking the maximum or minimum value, to obtain the data after preliminary selecting, thereby improving the accuracy and validity of data analysis; (2) selecting out invalid data from the accident working condition feature parameters, to eliminate the invalid data that affects the diagnostic results, thereby improving the accuracy and validity of the data.

Step 103, performing parallel diagnosis on various typical accident working conditions via a plurality of logic calculation units, each logic calculation unit performing logic calculation on abnormal feature parameters, important unit safety signals and special safety facility states relating to the logic calculation unit according to a preset logic, and diagnosing whether typical accident working conditions corresponding to the logic calculation unit have occurred.

Specifically, at least one logic calculation unit is provided for each typical accident working condition, and the logic calculation units for different typical accident working conditions run in parallel, to perform logic calculation for different typical accident working conditions, so as to diagnose whether each typical accident working condition occurs in the shortest time.

Characterization of typical accident working conditions of the unit needs to combine the accident working condition feature parameters, important unit safety signals, and the special safety facility states. The present invention uses parallel monitoring and logical calculation methods, so that starting accidents or superimposed accidents can be monitored simultaneously, and the related logics do not interfere with each other.

Taking the previous pressurized water reactor nuclear power plant as example, the characterization logic for various typical accident working conditions is explained as following:

### (1) Typical thermal and hydraulic accidents

Thermal and hydraulic accidents refer to accident working conditions that cause direct changes in the state parameters of the unit.

### (1) SGTR accident

The SGTR accident logic calculation unit is used to diagnose whether an SGTR accident has occurred. Referring to Fig. 2, an SGTR accident is diagnosed as has occurred if any of the following conditions occur:
(a) The leakage rate balance abnormal signal of the primary circuit and the secondary circuit exists. The existence of this signal indicates that a significant leakage from the primary circuit the secondary circuit (for example exists (such as, the threshold for the leakage rate from the primary circuit to the secondary circuit in the pressurized water reactor nuclear power plant is more than 70L/H). According to the functional connections of the pressurized water reactor nuclear power systems, it can be determined that the signal is triggered by a SGTR accident.
(b) The radioactive measurement value of steam pipeline on a secondary side of the steam generator is greater than a high-high threshold (e.g., the threshold of the PWR nuclear power plant is 4.0E+6Bq/m³) or the radioactive measurement value of the condensate sampling from the steam generator is greater than a high-high threshold (e.g., the high-high threshold of the PWR nuclear power plant is 2.0E+8Bq/m³), which can indicate a significant radioactive leakage from the primary circuit to the secondary circuit. Based on the sources of the radioactivity in PWR nuclear units, it can be determined that the SGTR accident has caused the rupture of the steam generator heat transfer tubes, leading to the leakage of radioactive substances from the primary circuit to the secondary circuit.
(c) The radioactive measurement value of the steam pipeline on the secondary side of the steam generator is greater than a high threshold (e.g., the high threshold of the PWR nuclear power plant is 4.0E+4 Bq/m³), or the radioactive measurement value of the condensate sampling from the steam generator is greater than a high threshold (e.g., the high threshold of the PWR nuclear power plant is 2.0E+6Bq/m³), combined with low level in the primary circuit pressurizer or low level in the volume control tank (e.g., the lowest water level of the corresponding equipment in the PWR nuclear plant, indicating a significant amount of water makeup in the primary circuit when the signal is triggered), characterize an SGTR accident. When there is slight radioactivity in the secondary circuit, the authenticity of the SGTR accident is verified by the water level fluctuation signals in the primary circuit.

### (2) primary circuit LOCA accident

The primary circuit LOCA accident is distinguished into in-containment LOCA and out-of-containment LOCA according to the location of the LOCA. Two logic calculation units are required to diagnose the two types of LOCA accidents respectively.

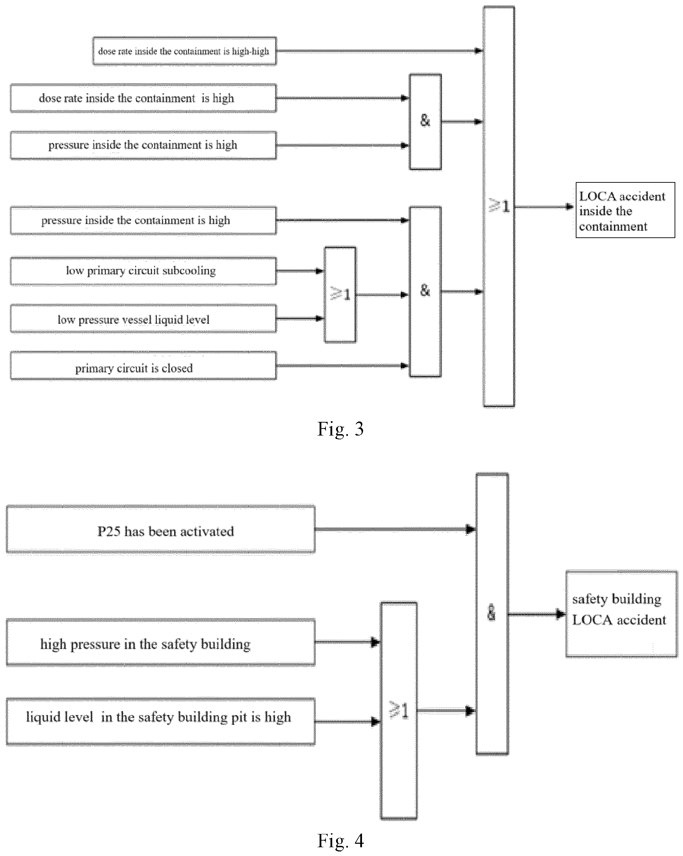

The LOCA accident logic calculation unit inside the containment vessel is used to diagnose whether a LOCA accident inside the containment vessel has occurred. Referring Fig. 3, if any of the following situations occur, it is diagnosed that a LOCA accident in the containment vessel has occurred:
(a) The dose rate measurement value inside the containment reaches a high-high threshold (e.g., the high-high threshold of the pressure water reactor nuclear power plant is 1.0E+1Gy/h), indicating that the pressure boundary of the primary circuit is damaged, and the radioactive materials have broken through the second safety barrier.
(b) When the dose rate measurement inside the containment reaches a high threshold (e.g., the high-high threshold of the pressurized water nuclear power plant is 1.0E-2Gy/h), it needs to be verified by measuring the pressure inside the containment vessel. If the pressure measurement value inside the containment vessel also reaches a high threshold (e.g., the high threshold of the pressurized water reactor nuclear power plant is 1.23 bar.a), it indicates that a LOCA accident has occurred inside the containment vessel.
(c) In the event that the primary circuit is closed and the pressure measurement value within the containment vessel reaches a high threshold, via low subcooling (△ Tsat) and low liquid level of the pressure vessel (LRPV) (such as the threshold of the pressurized water reactor nuclear power plant △ Tsat < -ε corresponding overheating of the primary circuit, and LRPV is lower than the bottom of the heat tube of the primary circuit ), it can be determined that the core is gradually losing water. LRPV below the bottom of the primary circuit heat tube signifies a severe degradation of the core water capacity, indicating a LOCA accident inside the containment has occurred.

The logic calculation unit for the safety building LOCA accident is used to diagnose whether a LOCA accident occurs in the safety building. Referring to Fig. 4, the logic for diagnosing the occurrence of a LOCA accident in the safety building is as follows: it is confirmed that the RIS-RHR connection condition is met by the P25 signal (the signal allowing the connection of the residual heat removal system) being activated, and after the connection it is determined whether the safety building pressure measurement value is greater than a high threshold (for example, the high threshold for the PWR nuclear power plant is 0.12 Mpa, indicating that a mass and energy release has occurred in the safety building) or measurement value of the liquid level in the safety building is higher than a high threshold (for example, the high threshold of the PWR nuclear power plant is the overflow level value 0.15m when the pit is about to overflow), and after the RHR connection, LOCA accident in the safety building is characterized by a radioactive leakage or a large amount of collected leaked coolant in the primary circuit.

### (3) Secondary circuit rupture accident

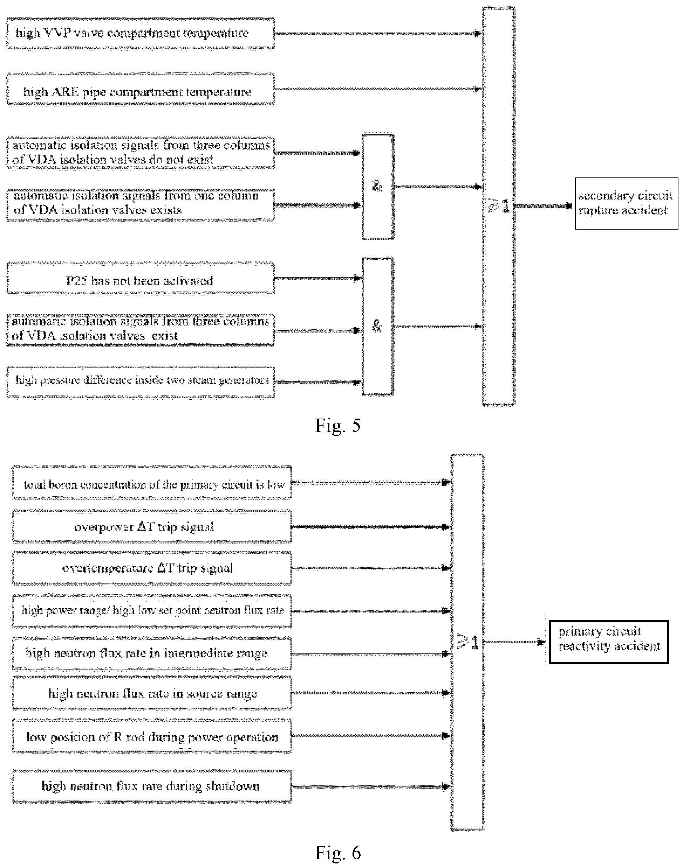

The secondary circuit rupture logic calculation unit is used to diagnose whether a secondary circuit rupture accident has occurred. Referring to Fig. 5, if one of the following conditions occur, it is diagnosed that a secondary circuit rupture accident has occurred:
(a) The valve compartment measurement value of a main steam isolation (VVP) valve reaches a high threshold (for example, the high threshold of the PWR nuclear plant is 75°C, designed to be far higher than the ambient temperature and to maintain sufficient sensitivity of the measuring instrument, indicating that a main steam leakage has occurred), which is used to diagnose a rupture accident in the main steam pipe outside the containment vessel.
(b) The compartment measurement value of a main feedwater system (ARE) pipeline reaches a high threshold (e.g., the high threshold of the PWR nuclear plant is 75°C, designed to be significantly higher than ambient temperature while maintaining adequate temperature sensitivity of the measuring instruments, indicating a leakage in the main feedwater pipe), is used for diagnosing a main feedwater pipe rupture outside the containment vessel.
(c) An automatic isolation signal for a column VDA (main steam release system) isolation valve of the main steam release system exists, it is necessary to eliminate interference of factors other than the steam generator, which is achieved by the absence of automatic isolation signals from three columns VDA isolation valves. Low pipe pressure in the main steam line can cause the VDA isolation valve to be isolated. A sudden drop in pressure in a single column main steam line indicates an uncontrolled leakage of the steam in the main steam line.
(d) The secondary circuit rupture is characterized by pressure difference inside two steam generators is high (e.g., the high-pressure difference threshold for the pressure water reactor nuclear power plant is 10 bar), the P25 signal is not activated, combined with the existence of automatic isolation signal of three columns VDA isolation valve.

### (4) Reactivity accident in the primary circuit

The reactivity accident logic calculation unit of the primary circuit is used to diagnose whether a reactivity accident has occurred in the primary circuit. As shown in Fig. 6, if any of the following conditions is met, it is diagnosed that a primary circuit reactivity accident has occurred:
(a) The total boron concentration measurement value of the primary circuit is lower than a low threshold (the low threshold for the pressurized water reactor power plant and the following thresholds in the paragraph are based on the thresholds required by the technical specifications of the unit).
(b) overpower or overtemperature Δ T trip signal.
(c) high power range/ high low set point neutron flux rate.
(d) high neutron flux rate in intermediate rang.
(e) high neutron flux rate in source range.
(f) low position of R rod during power operation.
(g) high neutron flux rate during shutdown.

### (2) Loss of support function accident

The loss of support function accidents mainly includes power loss and cold loss. These accidents can be either starting accidents or superimposed accidents.
(1) LOOP accident: The accident of off-site power loss accidents is characterized by the alarm of losing voltage on the corresponding AC bus to determine the occurrence of the accident. The logic calculation unit for the accident of losing off-site power is used to diagnose whether the off-site power loss accident has occurred.
(2) SBO accident: The occurrence of a SBO accident is determined by characterizing the alarm loss of voltage on the corresponding emergency bus and non-emergency bus. The SBO accident logic calculation unit is used to diagnose whether an SBO accident has occurred.
(3) Electrical panel power loss accident: The occurrence of a single electrical panel power loss accident is determined by characterizing the alarm loss of voltage in the corresponding electrical panel. The logic calculation for the electrical panel power loss accidents is used to diagnose whether the electrical panels power loss accident has occurred.
(4) TLOCC accident: The total loss of cold chain accident is determined by the alarm loss of RRI/SEC system (Equipment cooling water system/Important plant water use system). The logic calculation unit for the total loss of cold chain accident is used to diagnose whether a total loss of cold chain accident has occurred.
(5) RIS-RHR failure accident: The RIS-RHR failure accident is determined by the presence of an alarm for RIS-RHR equipment failure. The diagnosis of whether an RIS-RHR failure accident has occurred is performed by a RIS-RHR failure accident logic calculation unit.

### (3) Spent fuel pool accident

Spent fuel pool accidents are categorized into spent fuel pool cold loss accidents and spent fuel pool water loss accidents.

### (1) spent fuel pool cold loss accidents

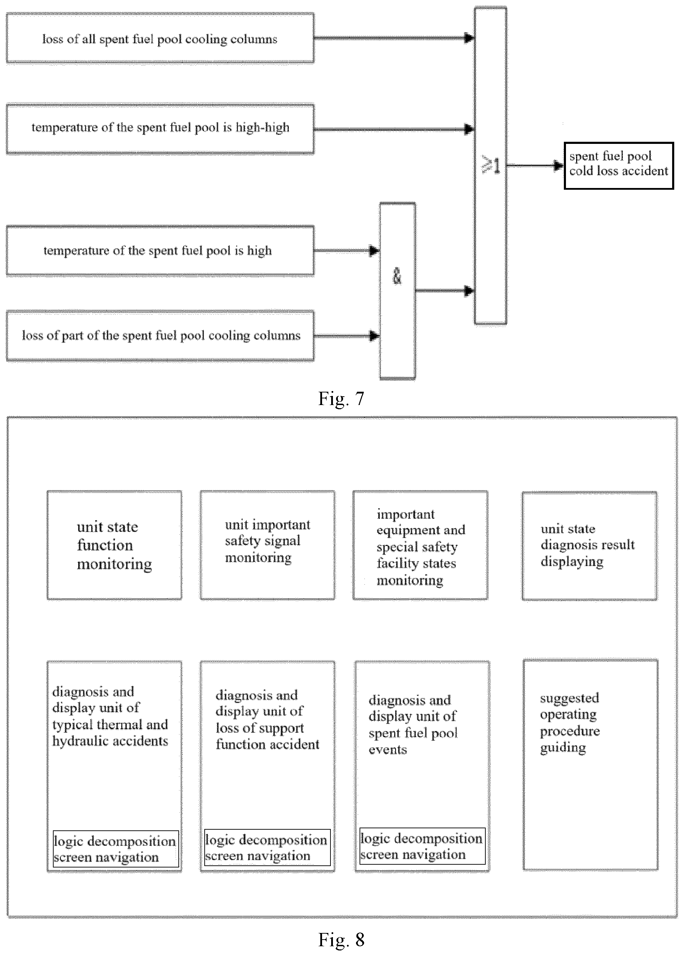

The spent fuel pool cold loss accident is diagnosed by the logic calculation unit for the spent fuel pool cold loss accident. Referring to Fig.7, if any of the following conditions occur, the spent fuel pool cold loss accident is diagnosed to have occurred:
(a) Loss of all spent fuel pool cooling columns.
(b) The spent fuel pool temperature measurement value reaches a high-high threshold (the high-high threshold of the pressurized water reactor nuclear power plant is 78°C, which is the temperature at which emergency human intervention is required for the spent fuel pool).
(c) Loss of some spent fuel pool cooling columns and the spent fuel pool temperature measurement value reaches the high threshold (the high threshold of the pressurized water reactor power plant is 50°C, which is the highest temperature reached during normal operation of the spent fuel pool).

(2) Spent fuel pool water loss accident: The spent fuel pool water loss accident is characterized by the spent fuel pool water level measurement value reaching a low threshold (the low threshold of the pressurized water reactor nuclear power plant is 16.3 m, and this threshold is the alarm water level to prevent the spent fuel pool water level from being lower than the suction port of its cooling column). The logic calculation unit for spent fuel pool water loss accident is used to diagnose whether a spent fuel pool water loss accident has occurred.

Step 104, displaying the diagnosis results of all typical accident working conditions on an automatic accident working condition diagnosis screen for a unit (104).

Preferably, when the diagnosis result is that the nuclear power plant is experiencing a typical accident working condition (i.e., any one or more logic calculation units diagnose that a typical accident working condition has occurred), a sound and light alarm is issued to prompt the operator to call up the automatic diagnosis screen for accident working condition of the unit. The operator obtains the diagnosis result of the typical accident working condition of the nuclear power plant set through the automatic diagnosis screen for the accident working condition. The sound and light alarm can be issued through the sound and light alarm system in the main control room.

The related supporting screens are introduced in detail below in view of the aforementioned pressurized water reactor nuclear power plant.

An illustrative diagram of an accident working condition automatic diagnosis screen according to one embodiment of the present invention is shown in Fig. 8, which is used to display to user the important unit safety signals, special safety facility states, diagnosis results of typical accident working conditions, and recommended accident operating procedures to be executed, required for automatic diagnosis of typical accidents working conditions.

Specifically, the accident working conditions automatic accident diagnosis screen includes a typical accident working conditions diagnosis display area, which is used to display the diagnosis results of typical thermal and hydraulic accidents, the diagnosis results of loss of support function accidents, and the diagnosis results of spent fuel pool events. By modularly displaying the diagnosis results of typical accident working conditions, the operator can clearly understand the states information of the related units. Preferably, the typical accident working condition diagnosis display area is provided with a display indicator lights corresponding to the typical accident working conditions. When the indicator light is on, it indicates that the accident has been triggered.

Preferably, the accident working condition automatic diagnosis screens include a unit state function monitoring area, a unit important safety signal monitoring area, an important equipment and special safety facility states monitoring area, a unit state diagnosis result displaying area, and a suggested operating procedure guiding area. The accident working condition automatic diagnosis screens provides the diagnosis results of the typical accident working conditions, integrates the important safety information and special safety facility states information on the diagnosis interface, so as to verify the automatic diagnosis results via related information.

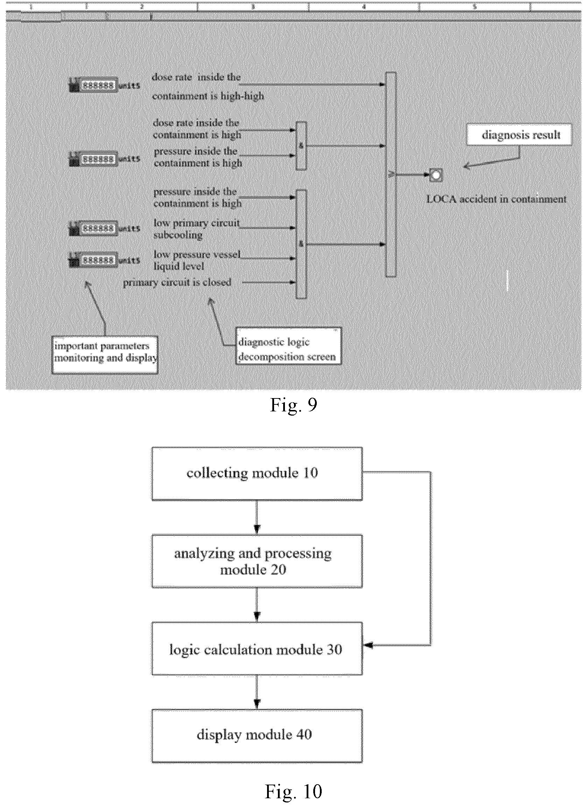

Preferably, the accident working condition automatic diagnosis screen can also be navigated to the diagnostic logic decomposition screens of specific typical accident working condition via corresponding navigation links, and the operator can obtain the diagnostic logic decomposition screen of specific typical accident working conditions through the navigation links on the automatic diagnosis screen of the accident working conditions, the corresponding diagnostic logic decomposition screen is shown in Fig. 9. By integrating parameter monitoring in the diagnostic logic decomposition screen, along with the important safety signals of the unit and the special safety facility states in the main screen, the triggering of the automatic diagnostic logic can be directly verified, avoiding the operator's unordered search, which can reduce the operator workload and reduce the accident response time, allowing for a quick transition to the accident control phase of the unit.

According to the above description, it can be known that the monitoring method for an accident working condition of a nuclear power plant set of the present invention performs diagnosis on various typical accident working conditions in parallel without mutual influence, and can diagnose the starting accidents or the superimposed accidents at the same time. In addition, the unit safety signals and the special safety facility states can monitor the states of the unit equipment in real time, and trigger related signals or change the display of screen icons when the states changes.

Referring to Fig. 10, the monitoring system for an accident working condition of a nuclear power plant set of the present invention includes a collecting module 10, an analyzing and processing module 20, a logic calculation module 30, and a display module 40.

The collecting module 10 is used to collect accident working condition feature parameters, important unit safety signals and special safety facility states relating to typical accident working conditions.

Taking a pressurized water reactor nuclear power plant as an example, the classification of typical accident working conditions of the present invention is detailed as following:
(1) Typical thermal-hydraulic accidents, including SGTR accidents, primary circuit LOCA accidents, primary circuit reactivity accidents, and secondary circuit rupture accidents;
(2) Loss of support function accidents, including LOOP accidents, SBO accidents, electrical panels power loss accidents, TLOCC accidents, and RIS-RHR failures;
(3) Spent fuel pool events, including residual heat removal system failures and spent fuel pool water loss accidents.

Specifically, the accident working condition feature parameters can be automatically monitored and obtained via the nuclear power plant function parameter measurement instruments. For example, the reactor nuclear power can be measured by the power range detector, the intermediate range detector, and the source range detector of the nuclear instrument system. The core neutron flux, the core temperature, and the pressure vessel water level can be measured by the self-powered neutron detector and the thermocouple detector of the core measurement system. The primary circuit pressure can be measured by the reactor coolant system pressure measurement instrument arranged in the pressurizer and the safety injection system pressure measurement instrument arranged in the primary circuit hot leg. The primary circuit temperature can be measured by the narrow range temperature measurement instrument of the reactor coolant system arranged in the primary circuit cold leg and hot leg, and the wide range temperature measurement instrument of the safety injection system. The important safety signals of the unit can be obtained by using the protection signals of the normal operation of the nuclear power unit or by using the unit states parameters to design the corresponding logic. The special safety facilities refer to the safety facilities specially provided by the nuclear power plant to ensure the removal of core heat and the integrity of the containment, to limit the development of accidents and to mitigate the consequences of accidents. The special safety facilities states can be monitored by the NSSS function availability information dedicated to the unit accident working conditions.

The analyzing and processing module 20 is used to analyze and process the accident working condition feature parameters, and selecting abnormal feature parameters that are not within a preset threshold range.

Specifically, the analyzing and processing module 20 includes a threshold comparison unit, which is used to compare the accident working condition feature parameters with a preset threshold, and the parameters outside the preset threshold range are judged as abnormal feature parameters.

Preferably, the analyzing and processing module 20 further includes a preprocessing unit, which is used to preprocess the accident working condition feature parameters before comparing them with the preset thresholds, including one or two of the following processes: (1) selecting the accident working condition feature parameters according to the principle of conservative values, i.e., performing conservative values on the collected multiple redundant data, such as taking the maximum or minimum value, to obtain the data after preliminary selecting, thereby improving the accuracy and validity of data analysis; (2) selecting out invalid data from the accident working condition feature parameters, to eliminate the invalid data that affects the diagnostic results, thereby improving the accuracy and validity of the data.

The logic computation module 30 includes a plurality of logic computation units in parallel; the plurality of logic computation units are configured to perform logic on the abnormal feature parameters, the key safety signals of the unit, and the status of the dedicated safety facilities related to the logic computation unit according to the preset, to diagnose whether a typical accident condition corresponding to the logic computation unit occurs.

Specifically, the logic calculation module 30 is provided with at least one logic calculation unit for each typical accident working condition, and the logic calculation units for different typical accident working conditions run in parallel to perform logic calculation for each typical accident working condition, thereby diagnosing whether each typical accident working condition has occurred within the shortest time.

Specifically, the logic calculation module 30 includes:
a SGTR accident logic calculation unit, used for diagnosing whether an SGTR accident has occurred;
a LOCA accident logic calculation unit inside the containment vessel, for diagnosing whether a LOCA accident inside the containment vessel has occurred;
a safety building LOCA accident logic calculation unit, used for diagnosing whether a safety building LOCA accident has occurred;
a secondary circuit rupture accident logic calculation unit, used for diagnosing whether a secondary circuit rupture accident has occurred;
a primary circuit reactivity accident logic calculation unit, used for diagnosing whether a primary circuit reactivity accident has occurred;
a LOOP accident logic calculation unit, used for diagnosing whether a LOOP accident has occurred;
an SBO accident logic calculation unit, used for diagnosing whether an SBO accident has occurred;
an electrical panel power loss accident logic calculation unit, used for diagnosing whether an electrical panel power loss accident has occurred;
a TLOCC accident logic calculation unit, used for diagnosing whether a TLOCC accident has occurred;
a RIS-RHR failure accident logic calculation unit, used for diagnosing whether a RIS-RHR failure accident has occurred;
a spent fuel pool cold loss accident logic calculation unit, used for diagnosing whether a spent fuel pool cold loss accident has occurred; and
a spent fuel pool water loss accident logic calculation unit, used for diagnosing whether a spent fuel pool water loss accident has occurred.

The calculation logic of each accident logic calculation unit in the logic calculation module 30 has been described in the aforementioned method embodiments, and will not be repeated here.

The display module 40, is used for displaying the diagnosis results of all typical accident working conditions on the automatic accident working condition diagnosis screen for the unit.

The display module 40 is connected with an alarm module, which is used to issue a sound and light alarm to prompt the operator to call up automatic diagnosis screen of the unit accident working condition when the diagnosis result is that the nuclear power unit has a typical accident working condition (i.e., any one or more logic calculation units diagnose that a typical accident working condition has occurred). The alarm module can be a sound and light alarm system in the main control room.

The related supporting screens are introduced in detail below in view of the aforementioned pressurized water reactor nuclear power plant.

An illustrative diagram of an accident working condition automatic diagnosis screen according to one embodiment of the present invention is shown in Fig. 8, which is used to display to user the important unit safety signals, special safety facility states, diagnosis results of typical accident working conditions, and recommended accident operating procedures to be executed, required for automatic diagnosis of typical accidents working conditions.

Specifically, the accident working conditions automatic accident diagnosis screen includes a typical accident working conditions diagnosis display area, which is used to display the diagnosis results of typical thermal and hydraulic accidents, the diagnosis results of loss of support function accidents, and the diagnosis results of spent fuel pool events. By modularly displaying the diagnosis results of typical accident working conditions, the operator can clearly understand the states information of the related units. Preferably, the typical accident working condition diagnosis display area is provided with a display indicator lights corresponding to the typical accident working conditions. When the indicator light is on, it indicates that the accident has been triggered.

Preferably, the accident working condition automatic diagnosis screens include a unit state function monitoring area, a unit important safety signal monitoring area, an important equipment and special safety facility states monitoring area, a unit state diagnosis result displaying area, and a suggested operating procedure guiding area. The accident working condition automatic diagnosis screens provides the diagnosis results of the typical accident working conditions, integrates the important safety information and special safety facility states information on the diagnosis interface, so as to verify the automatic diagnosis results via related information.

Preferably, the display module 40 is further used to, navigate to the diagnostic logic decomposition screens of specific typical accident working condition via corresponding navigation links on the accident working condition automatic diagnosis screen, the corresponding diagnostic logic decomposition screen is shown in Fig. 9. By integrating parameter monitoring in the diagnostic logic decomposition screen, along with the important safety signals of the unit and the special safety facility states in the main screen, the triggering of the automatic diagnostic logic can be directly verified, avoiding the operator's unordered search, which can reduce the operator workload and reduce the accident response time, allowing for a quick transition to the accident control phase of the unit.

As can be seen from the above detailed description of the present invention, the monitoring method and system for an accident working condition of a nuclear power plant set of the present invention not only monitor the accident working condition feature parameters in real time, but also monitor the important unit safety signals and the special safety facility states in real time, automatically diagnose the starting accidents or superimposed accidents of a unit in parallel, and the accidents are displayed via a human-machine interaction interface, thereby assisting an operator in determining and handling accident working conditions of the nuclear unit.

Compared with the prior art, the monitoring method and system for an accident working condition of a nuclear power plant set of the present invention at least have the following advantages:
1) Typical accident working conditions of the unit can be performed automatically in real-time. The present invention can realize the automatic diagnosis of the starting accidents or superimposed accidents in the accident situation, which can help the operator quickly understand the current states of the unit and predict the changes of the unit states, thereby improving the operator's response speed to accidents, reducing human errors during the operator's control of the unit accidents effectively, and providing a decision basis for the power plant's emergency response organization.
2) Multiple accident logic calculation units diagnose various typical accident working conditions in parallel without affecting each other, allowing simultaneous diagnosis of starting accidents or superimposed accidents.
3) Based on the detailed design of the supporting graphics and logic graphics, the integrated display of important unit signals and the special safety facility states used in typical accident working conditions of the unit, so that the operator can clearly see the system and function configuration of the unit that is needed and truly reliable, which can significantly improve the response efficiency of the operator to the accident working conditions of the unit.
4) According to the principle of different degrees of deterioration of the six state parameters of the unit caused by the accident working conditions, the classification of typical accident working conditions are defined, which is conducive to the clear display and distinction of the typical accident working conditions.
5) Automatically prompt the triggering causes of the accidents, the states of special safety facilities for accident response, and suggested operating procedures when accidents occur in the plant, which helps to further improve the intelligence and automation level of nuclear power plants.

The embodiments in the specification are described in a progressive manner, with each embodiment focusing on the differences from the other embodiments. The same or similar parts between embodiments can be referred to each other. As for the device embodiments disclosed herein, since they correspond to the method embodiments as disclosed, he device embodiments are described relatively simply, and the related parts can refer to the description of the method parts.

One ordinary skilled in the art may further realize that the units and algorithm steps described in the embodiments disclosed herein can be implemented in electronic hardware, software or a combination thereof, to clearly illustrate the interchangeability of hardware and software, the compositions and steps of each embodiment have been described generally in terms of function in the above description. Whether the functions are performed in hardware or software depends on the particular application and design constraints of the technical solution. One ordinary skilled in the art may adopt different methods to implement the described functions for each particular application, but such implementation should not be considered as go beyond the scope of the present invention.

The steps of the methods or algorithms described in connection with the embodiments of the present invention may be directly implemented in hardware, in software modules executed by a processor, or combination thereof. The software modules may be stored in RAM, memory, ROM, electrically programmable ROM, electrically eras programmable ROM, registers, hard disk, removable disks, CD-ROM, or any other form of storage medium known in the art.

Obviously, the embodiments described above are only a part of the embodiments of the present application, not all embodiments of the present invention. The drawings only show some preferable embodiments of the present invention, but do not limit the scope of the present invention. The present invention may be implemented in many different forms and, conversely, the embodiments are provided with the aim of providing a more thorough understanding of the present invention. Although the present invention is described in detail in light of the preceding embodiments, one ordinary skilled in the art may modify the technical solutions described in the preceding specific implementation modalities, or some of the technical characteristics of the equivalent replacement. The same applies to any direct or indirect use of the equivalent structure of the specification and the attached drawings in other related technical fields.

## Claims

1. A monitoring method for an accident working condition of a nuclear power plant set, **characterized in that** the monitoring method for an accident working condition of a nuclear power plant set comprises the steps of:
collecting accident working condition feature parameters, important unit safety signals and special safety facility states relating to typical accident working conditions (101);
analyzing and processing the accident working condition feature parameters, and selecting abnormal feature parameters that are not within a preset threshold range (102);
performing parallel diagnosis on various typical accident working conditions via a plurality of logic calculation units, each logic calculation unit performing logic calculation on abnormal feature parameters, important unit safety signals and special safety facility states relating to the logic calculation unit according to a preset logic, and diagnosing whether typical accident working conditions corresponding to the logic calculation unit have occurred (103); and
displaying diagnosis results of all typical accident working conditions on an automatic accident working condition diagnosis screen for a unit (104).

2. The monitoring method for an accident working condition of a nuclear power plant set according to claim 1, **characterized in that** the typical accident working conditions comprise typical thermal and hydraulic accidents, loss of support function accidents, and spent fuel pool events; wherein the typical thermal and hydraulic accidents comprise steam generator heat transfer tube rupture accidents, primary circuit rupture accidents, primary circuit reactivity accidents, and secondary circuit rupture accidents; the loss of support function accidents comprise off-site power loss accidents, power loss accidents in plant, electrical panels power loss accidents, total loss of cold chain accidents, and residual heat removal system failures; the spent fuel pool events comprise spent fuel pool cold loss accidents and spent fuel pool water loss accidents;
at least one logic calculation unit is provided for each typical accident working condition, with logic calculation units of different typical accident working condition being performed in parallel, for performing logic calculation on different typical accident working conditions respectively.

3. The monitoring method for an accident working condition of a nuclear power plant set according to claim 2, **characterized in that** a steam generator heat transfer tube rupture logic calculation unit is used to diagnose whether a steam generator heat transfer tube rupture accident has occurred, and diagnose that a steam generator heat tube rupture accident has occurred if any of the following conditions is met:
leakage rate balance abnormal signal of the primary circuit and the secondary circuit exists;
radioactive measurement value of steam pipeline on a secondary side of the steam generator is greater than a high-high threshold, or radioactive measurement value of the condensate sampling from the steam generator is greater than a high-high threshold;
radioactive measurement value of the steam pipeline on the secondary side of the steam generator is greater than a high threshold, or the radioactive measurement value of the condensate sampling from the steam generator is greater than a high threshold, combined with low level in the primary circuit pressurizer or low level in the volume control tank.

4. The monitoring method for an accident working condition of a nuclear power plant set according to claim 2, **characterized in that** the primary circuit rupture accidents are distinguished into rupture in the containment and rupture in the safety building depending on location of the rupture, and two accident logic calculation units are used to diagnose the two types of rupture accidents respectively;
a containment rupture accident logic calculation unit is used to diagnose whether a containment rupture accident has occurred, and determines a containment rupture accident has occurred if any of the following conditions is met: (a) dose rate measurement value inside the containment reaches a high-high threshold; (b) dose rate measurement inside the containment reaches a high threshold, combined with pressure measurement value inside the containment reaches a high threshold; (c) in condition of primary circuit closure, pressure measurement value inside the containment reaches a high threshold, and a signal of low primary circuit subcooling or low pressure vessel liquid level exists;
a safety building rupture accident logic calculation unit is used to diagnose whether a safety building rupture accident has occurred, and logic for diagnosing that a safety building rupture accident has occurred is signal for the residual heat removal system to allow connection has been activated, pressure measurement value in the safety building is greater than high threshold or liquid level measurement value in the safety building pit is greater than a high threshold.

5. The monitoring method for an accident working condition of a nuclear power plant set according to claim 2, **characterized in that** the secondary circuit rupture accident logic calculation unit is used to diagnose whether a secondary circuit rupture accident has occurred, and occurrence of any of the following conditions will diagnose that the secondary circuit rupture accident has occurred:
valve compartment measurement value of a main steam isolation valve reaches a high threshold;
compartment measurement value of a main feedwater system pipeline reaches a high threshold;
an automatic isolation signal for isolation valve of one column of the main steam release system exists, and automatic isolation signal for the isolation valve of three columns of the main steam release system does not exist;
pressure difference inside two steam generators is high, and signal allowing connection to the residual heat removal system is not activated, combined with automatic isolation signal for isolation valves of three columns of the main steam release system exists.

6. The monitoring method for an accident working condition of a nuclear power plant set according to claim 2, **characterized in that** the primary circuit reactivity accident logic calculation unit is used to diagnose whether a primary circuit reactivity accident has occurred, and any of the following conditions can diagnose that a primary circuit reactivity accident has occurred:
total boron concentration measurement value of the primary circuit is lower than a low threshold;
overpower or overtemperature Δ T trip signal;
high power range/ high low set point neutron flux rate;
high neutron flux rate in intermediate range;
high neutron flux rate in source range;
low position of R rod during power operation;
high neutron flux rate during shutdown.

7. The monitoring method for an accident working condition of a nuclear power plant set according to claim 2, **characterized in that** diagnosis logic for the loss of support function accident is:
judging occurrence of the off-site power loss accident by existence of an alarm for loss of voltage on the corresponding plant AC bus;
judging occurrence of a power loss accidents in plant by existence of an alarm for loss of voltage on the corresponding emergency bus and non-emergency bus;
judging occurrence of the electrical panels power loss accidents by existence of an alarm for loss of voltage on the corresponding electrical panels;
judging occurrence of the total loss of cold chain accidents by existence of an alarm for the loss of the equipment cooling water system and the important plant water system;
judging occurrence of residual heat removal system failures by existence of an alarm for an equipment failure in the residual heat removal system.

8. The monitoring method for an accident working condition of a nuclear power plant set according to claim 2, **characterized in that** the spent fuel pool water loss accident is **characterized by** water level measurement value of the spent fuel pool reaching a low threshold;
the spent fuel pool cold loss accidents are diagnosed by spent fuel pool cold loss accident logic calculation unit, and the spent fuel pool cold loss accidents are determined to have occurred if any of the following conditions is met:
loss of all spent fuel pool cooling columns;
measurement temperature of the spent fuel pool reaches a high-high threshold;
loss of part of the spent fuel pool cooling columns and measurement temperature of the spent fuel pool reaches a high threshold.

9. The monitoring method for an accident working condition of a nuclear power plant set according to claim 1, **characterized in that** the monitoring method for an accident working condition of a nuclear power plant set further comprises:
when the diagnosis result is that a typical accident working condition of the nuclear power plant set occurs, an sound and light alarm is issued to request the operator to call the automatic diagnosis screen for the unit accident working condition; the operator obtains the diagnosis result of the typical accident working condition of the nuclear power plant set via the automatic diagnosis screen for the unit accident working condition, and obtains diagnosis logic decomposition screen for specific typical accident working condition via corresponding navigation link on the automatic diagnosis screen for the accident working condition.

10. A monitoring system for an accident working condition of a nuclear power plant set, **characterized in that** the monitoring system for an accident working condition of a nuclear power plant set comprises:
a collecting module (10), used for collecting accident working condition feature parameters, important unit safety signals and special safety facility states relating to typical accident working conditions;
an analyzing and processing module (20), used for analyzing and processing the accident working condition feature parameters, and selecting abnormal feature parameters that are not within a preset threshold range;
a logic calculation module (30), comprising a plurality of logic units in parallel; each logic calculation unit is used for performing logic calculation on abnormal feature parameters, important unit safety signals and special safety facility states relating to the logic calculation unit according to a preset logic, and diagnosing whether typical accident working conditions corresponding to the logic calculation unit have occurred; and
a display module (40), used for displaying diagnosis results of all typical accident working conditions on an automatic accident working condition diagnosis screen for a unit.

11. The monitoring system for an accident working condition of a nuclear power plant set according to claim 10, **characterized in that** the logic calculation module is provided with at least one logic calculation unit for each typical accident working condition, and the logic calculation units for different typical accident working conditions run in parallel, performing logic calculations for different typical accident working conditions respectively.

12. The monitoring system for an accident working condition of a nuclear power plant set according to claim 10, **characterized in that** the logic calculation module comprises:
a steam generator heat transfer tube rupture accident logic calculation unit, used for diagnosing whether a steam generator heat transfer tube rupture accident has occurred;
a containment rupture accident logic calculation unit, used for diagnosing whether a containment rupture accident has occurred;
a safety building rupture accident logic calculation unit, used diagnosing whether a safety building rupture accident has occurred;
a secondary circuit rupture accident logic calculation unit, used for diagnosing whether a secondary circuit rupture accident has occurred;
a primary circuit reactivity accident logic calculation unit, used for diagnosing whether a primary circuit reactivity accident has occurred;
an off-site power loss accident logic calculation unit, used for diagnosing whether an off-site power loss accident has occurred;
a power loss accident in plant logic calculation unit, used for diagnosing whether a power loss accidents in plant has occurred;
an electrical panels power loss accident logic calculation unit, used for diagnosing whether an electrical panels power loss accident has occurred;
a total loss of cold chain accidents calculation unit, used for diagnosing whether a total loss of cold chain accident has occurred;
a residual heat removal system failure logic calculation unit, used for diagnosing whether a residual heat removal system failure has occurred;
a spent fuel pool cold loss accidents logic calculation unit, used for diagnosing whether a spent fuel pool cold loss accident has occurred; and
a spent fuel pool water loss accidents logic calculation unit, used for diagnosing whether a spent fuel pool water loss accident has occurred.

13. The monitoring system for an accident working condition of a nuclear power plant set according to claim 10, **characterized in that** the accident working condition automatic diagnosis screen is used to display to the user the unit safety signals, the special safety facility states, the diagnosis results of typical accidents working condition, and recommended accident operating procedures to be executed, required for automatic diagnosis of typical accidents working conditions.

14. The monitoring system for an accident working condition of a nuclear power plant set according to claim 13, **characterized in that** the accident working condition automatic diagnosis screens comprise a typical accident working condition diagnosis displaying area, a unit state function monitoring area, a unit important safety signal monitoring area, an important equipment and special safety facility states monitoring area, a unit state diagnosis result displaying area, and a suggested operating procedure guiding area; wherein the typical accident working condition diagnosis displaying area is used to display the results of typical thermal and hydraulic accidents, the diagnosis results of loss of support function accidents, and the diagnosis results of spent fuel pool events, and to display the diagnosis results of typical accident working conditions via modularization, so that the operator can clearly understand the related unit state information.

15. The monitoring system for an accident working condition of a nuclear power plant set according to claim 10, **characterized in that** the displaying module is further used to navigate to diagnostic logic decomposition screen of specific typical accident working conditions via corresponding navigation links on the automatic diagnosis screens of the accident working conditions.
